Europäisches Patentamt

European Patent Office

Office européen des brevets

(19)

(11) Veröffentlichungsnummer: **0 036 212**

**A1**

(12) # EUROPÄISCHE PATENTANMELDUNG

(21) Anmeldenummer: **81101988.4**

(22) Anmeldetag: **17.03.81**

(51) Int. Cl.³: **G 02 B 5/14**
**C 03 C 25/06**

(30) Priorität: **19.03.80 DE 3010594**

(43) Veröffentlichungstag der Anmeldung:
**23.09.81 Patentblatt 81/38**

(84) Benannte Vertragsstaaten:
**AT BE CH FR GB IT LI NL SE**

(71) Anmelder: **SIEMENS AKTIENGESELLSCHAFT Berlin
und München**
**Postfach 22 02 61**
**D-8000 München 22(DE)**

(72) Erfinder: **Krause, Dieter**
**Ravensburger Ring 65**
**D-8000 München 65(DE)**

(54) **Vorrichtung zum partiellen Entlacken von Lichtwellenleitern.**

(57) Das partielle Entlacken der Lichtwellenleiter wird bisher von Hand ausgeführt, indem die einzelnen Lichtwellenleiter mit Lackentferner behandelt werden. Dieser wird mit einem Pinsel, Lappen oder einer Pipette aufgetragen. Ferner ist das Eintauchen der Lichtwellenleiterenden in einen Lackentferner bekannt. Gemäß der Erfindung wird eine Vorrichtung vorgeschlagen, mit der mehrere Lichtwellenleiter (1) gleichzeitig partiell entlackt werden können. Diese Vorrichtung ist dadurch gekennzeichnet, daß die Lichtwellenleiter (1) mit Hilfe eines schwenkbaren Hebels (6) in eine mit Lacklöser bzw. Lackentferner gefüllten Wanne (4) eingetaucht werden.

FIG 2

EP 0 036 212 A1

0036212

SIEMENS AKTIENGESELLSCHAFT Berlin und München

Unser Zeichen VPA

80 P 7 0 2 4 E

Vorrichtung zum partiellen Entlacken von Lichtwellen-leitern

Die Erfindung bezieht sich auf eine Vorrichtung zum partiellen Entlacken von Lichtwellenleitern, insbesondere der in einer Haltevorrichtung festgeklemmten Enden der Lichtwellenleiter.

Das partielle Entlacken der Lichtwellenleiter wird bisher von Hand durchgeführt, indem die einzelnen Lichtwellenleiter mit Lackentferner behandelt werden. Der Lackentferner wird dabei mit einem Pinsel, Lappen oder einer Pipette dem Lichtwellenleiter zugeführt. Bekannt ist auch das Entlacken durch Eintauchen der Enden der Lichtwellenleiter in einen Lackentferner.

Der Erfindung liegt die Aufgabe zugrunde, eine Vorrichtung zu schaffen, mit der auf einfache Weise mehrere Lichtwellenleiter gleichzeitig partiell entlackt werden können, wobei die Genauigkeit der Länge sowie der Lage der zu entlackenden Strecke genau reproduzierbar sein soll.

Die Vorrichtung gemäß der Erfindung ist dadurch gekennzeichnet, daß die Lichtwellenleiter mit Hilfe eines schwenkbaren Hebels in eine mit Lacklöser bzw. Lackentferner gefüllten Wanne, welche der gewünschten zu entlackenden Strecke entsprechend lang ausgebildet ist, eintauchbar sind.

Meist werden die Enden der Lichtwellenleiter in schwenkbaren Haltevorrichtungen festgeklemmt, um mehrere Lichtwellenleiter gleichzeitig behandeln zu können, sei es

Hs 1 Kow / 13.3.1980

zum Ablängen oder zum Spleißen. Besonders vorteilhaft ist, wenn die Lichtwellenleiter bereits vor dem Entlacken und im Bedarfsfalle vor dem Schneiden in diesen meist schwenkbaren Haltevorrichtungen festgeklemmt werden. In diesem Falle ist es vorteilhaft, daß die Lichtwellenleiterenden durch Schwenken der Haltevorrichtung einer Spleiß- und/oder einer Schneidvorrichtung über eine mit Lacklöser bzw. Lackentferner gefüllten Wanne geneigt und anschließend mit Hilfe eines vorzugsweise in Gegenrichtung schwenkbaren Hebels eingetaucht werden. Hierbei ist es vorteilhaft, daß die Eintauchzeit mit Hilfe einer Schaltuhr überwacht wird. Nach Ablauf der eingestellten Zeit kann die Schaltuhr ein Signal auslösen und/oder bei Automatisierung der Vorrichtung ein Hochschwenken des Hebels auslösen.

Anhand der Zeichnung, in der ein Ausführungsbeispiel dargestellt ist, wird die Erfindung näher erläutert. Es zeigen:

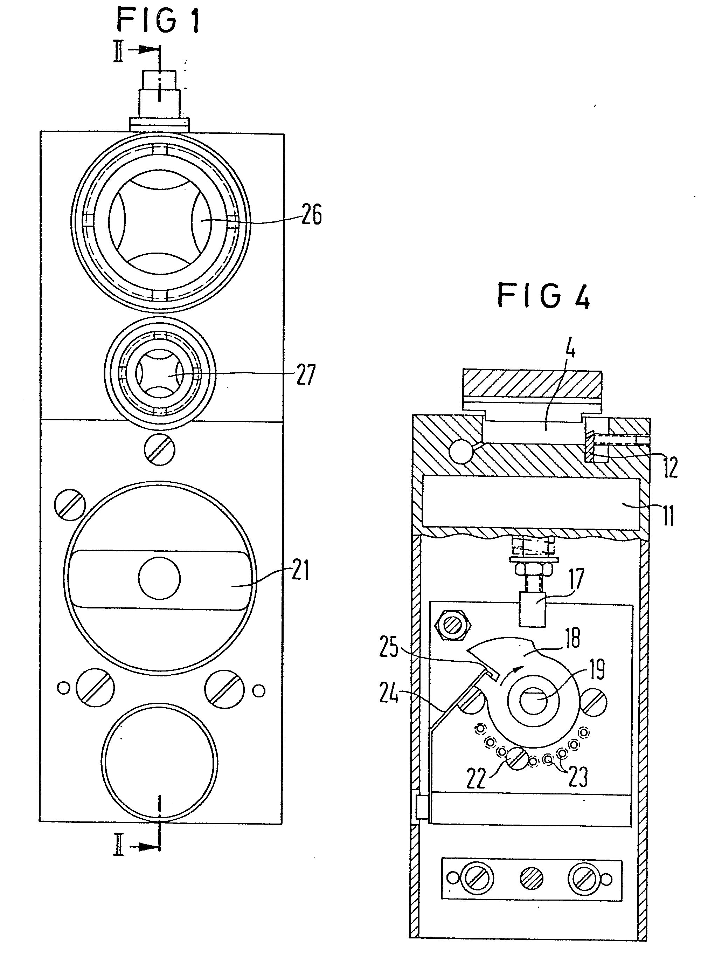

Figur 1 eine stirnseitige Ansicht der Vorrichtung,
Figur 2 eine Schnittansicht nach der Linie II-II der Figur 1,
Figur 3 eine Ansicht von oben teilweise im Schnitt und
Figur 4 einen Schnitt nach der Linie IV-IV der Figur 2.

Mit 1 sind die in einer Klemmvorrichtung 2 gehaltenen Lichtwellenleiter bezeichnet. Die Klemmvorrichtung 2 ist mit den Lichtwellenleitern 1 um einen mit 3 angedeuteten Drehpunkt schwenkbar und zwar aus der Waagerechten um einen Winkel $\alpha$. Die Klemmvorrichtung 2 mit Drehpunkt 3 kann beispielsweise einer Spleißvorrichtung zum Herstellen von Lichtwellenleiterverbindungen angehören. Sie kann aber auch als Zusatzgerät für die erfindungsgemäße Vorrichtung dienen. Eine solche Spleißvorrichtung ist beispielsweise in unserer älteren Patentanmeldung P 2951483 (VPA 79 P 7225 BRD) näher dargestellt und beschrieben. Die Klemmvorrichtung 2 kann so ausgebildet sein, daß sie bis sechs und mehr einzelne Lichtwellenleiterfasern 1 aufnehmen kann.

Wesentlichen Teil der Vorrichtung zum partiellen Entlacken bildet eine mit Lacklöser bzw. Lackentferner gefüllten Wanne 4, die am vorderen Ende eines Gehäuseteiles 5 ausgebildet ist. In diese Wanne 4 können die Enden der Lichtwellenleiter 1 mit Hilfe eines schwenkbaren Hebels 6 definiert eingetaucht werden. Das mit den Lichtwellenleitern 1 in Berührung kommende vordere Ende des schwenkbaren Hebels 6 ist mit einem Druckstück 7 aus Teflon oder dgl. versehen, damit die Lichtwellenleiter nicht beschädigt werden. Der eine U-Form aufweisende schwenkbare Hebel 6 ist mit Hilfe von Zapfen 8 im Gehäuseteil 5 schwenkbar gelagert. Zur Justierung der aus der Wanne herausragenden Enden der Lichtwellenleiter 1 ist das rückwärtige Ende der Wanne 4 mit einer entsprechenden Auflage 9 aus Teflon oder dgl. versehen.

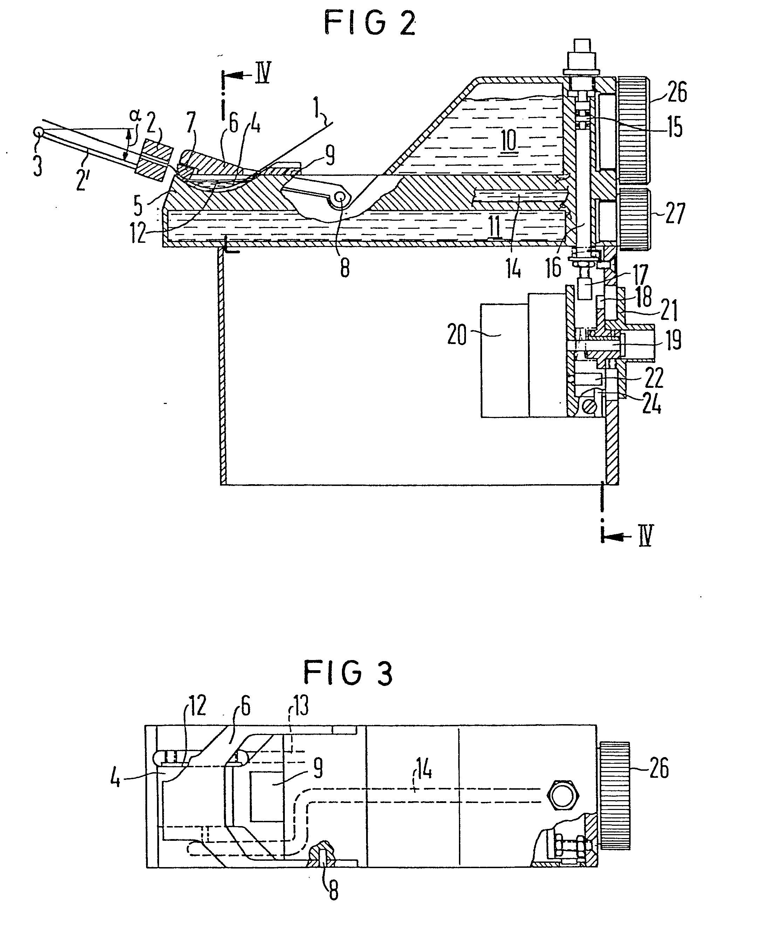

Oberhalb des Gehäuseteiles 5 ist ein Lackbehälter 10 und unterhalb desselben ein Sammelbehälter 11 ausgebildet. Zur Erzielung eines gleichmäßigen Flüssigkeitsstandes in der Wanne 4 ist diese mit einem seitlich angebrachten Wehr 12 versehen. Der über das Wehr 12 abfließende Lackentferner steht mit einem nur angedeuteten Kanal 13 mit dem Sammelbehälter 11 in Verbindung. Hingegen steht der Lackbehälter 10 über einen ebenfalls nur angedeuteten Kanal 14 mit der Wanne 4 in Verbindung. In dem Kanal 14, der den Lackbehälter 10 mit der Wanne 4 verbindet, ist ein Ventil 15 angeordnet, welches über einen gefederten Stößel 16 betätigbar ist. Das untere Ende 17 des Stößels 16 wirkt mit einer Nockenscheibe 18 zusammen, welche auf einer Welle 19 eines Federspeichers 20 angeordnet ist. Der Federspeicher 20 dient als Schaltuhr, der mit Hilfe eines Handgriffes 21 aufziehbar ist. Mit Hilfe des Handgriffes 21 ist die längsbeweglich auf der Welle 19 angeordnete Nockenscheibe 18 zum Aufziehen des Federspeichers axial beweglich, so daß die Nockenscheibe 18 mit dem unteren Ende 17 des gefederten Stößels 16 in Wirkverbindung kommt, wenn der Handgriff 21 im Uhrzeigersinn gedreht wird. In diesem Falle betätigt der Nocken der Nockenscheibe 18 kurzzeitig das untere Ende 17 des Stößels 16, wodurch eine einstellbare Menge Lack aus dem Lackbehälter 10 in die Wanne 4 fließt. Nach dem Freigeben des Handgriffes 21 kehrt die Nockenscheibe 18 in die in Figur 2 dargestellte Lage zurück. Unter der Wirkung des Federspeichers 20 wird dann die Nockenscheibe 18 in ihre Ausgangsstellung gemäß Figur 4 zurückgestellt. Die Ablaufzeit des Federspeichers 20 wird durch den Drehwinkel der Nockenscheibe 18 vorgegeben, und zwar mit Hilfe eines Schraubbolzens 22, welcher in verschieden vorgesehenen Bohrungen 23 einschraubbar ist, wie insbesondere Figur 4 zeigt. In der abgelaufenen Stellung wird die Nockenscheibe 18 durch eine Feder 24 gehalten, welche in der Ausgangsstellung in eine Nut 25 der Nockenscheibe 18 einrastet. Nach Ablauf der eingestellten Zeit wird ein in der Zeichnung nicht dargestellter Gong ausgelöst, wodurch das Ende des Entlackvorganges angezeigt wird.

Das Entlacken geht so vor sich, daß zum Beginn der Hebel 6 hochgeschwenkt wird und die Lichtwellenleiter 1 in die waagerecht angeordnete Klemmvorrichtung 2 eingespannt werden. Zum Entlacken wird die Klemmvorrichtung 2 um den Winkel $\alpha$ nach unten geschwenkt, wodurch die Enden der Lichtwellenleiter 1 über die mit Lackentferner gefüllte Wanne 4 geschwenkt werden. Danach wird der Hebel 6 in die in Figur 2 dargestellte Stellung geschwenkt, so daß die Lichtwellenleiter 1 durch das Druckstück 7 über eine vorgegebene Länge in den Lackbehälter 4 getaucht werden. Das Druckstück 7 taucht hierbei nicht in den Lackentferner. Gleichzeitig wird der Federspeicher 20 ausgelöst, der die Eintauchzeit bestimmt. Sobald der Federspeicher 20 abgelaufen ist, ertönt ein Gong, wodurch das Ende des Entlackvorganges angezeigt wird. Der Hebel 6 wird hochgeschwenkt, wodurch die eingedrückten Enden der Lichtwellenleiter 1 freigegeben werden; anschließend wird die
Klemmvorrichtung 2 wieder hochgeschwenkt. Mit 26 und 27
sind Schaugläser für den Lackbehälter 10 bzw. für den
Sammelbehälter 11 bezeichnet.

6 Patentansprüche
4 Figuren

0036212
80 P 7 0 2 4 E

Bezugszeichenliste

| | |
|---|---|
| 1 | Lichtwellenleiter |
| 2 | Klemmvorrichtung |
| 3 | Drehpunkt |
| 4 | Wanne |
| 5 | Gehäuseteil |
| 6 | schwenkbarer Hebel |
| 7 | Druckstück |
| 8 | Zapfen |
| 9 | Polster |
| 10 | Lackbehälter |
| 11 | Sammelbehälter |
| 12 | Wehr |
| 13 | Kanal zum Sammelbehälter |
| 14 | Kanal zum Lackbehälter |
| 15 | Ventil |
| 16 | gefederter Stößel |
| 17 | untere Ende des Stößels |
| 18 | Nockenscheibe |
| 19 | Welle |
| 20 | Federspeicher |
| 21 | Handgriff |
| 22 | Schraubbolzen |
| 23 | Bohrungen |
| 24 | Feder |
| 25 | Nut |
| 26 | Schauglas |
| 27 | Schauglas |

<u>Patentansprüche</u>

1. Vorrichtung zum partiellen Entlacken von Lichtwellenleitern, insbesondere der in einer Haltevorrichtung festgeklemmten Enden der Lichtwellenleiter, dadurch  g e -
k e n n z e i c h n e t  , daß die Lichtwellenleiter (1)
mit Hilfe eines schwenkbaren Hebels (6) in eine mit Lacklöser bzw. Lackentferner gefüllten Wanne (4), welche der
gewünschten zu entlackenden Strecke entsprechend lang
ausgebildet ist, eintauchbar sind.

2. Vorrichtung nach Anspruch 1, bei der die Enden der
Lichtwellenleiter in schwenkbaren Haltevorrichtungen
festgeklemmt sind, dadurch  g e k e n n z e i c h n e t  ,
daß die Lichtwellenleiterenden (1) durch Schwenken der
Klemmvorrichtung (2) über eine mit Lacklöser bzw. Lackentferner gefüllten Wanne (4) geneigt und anschließend
mit Hilfe eines vorzugsweise in Gegenrichtung schwenkbaren Hebels (6) eintauchbar sind.

3. Vorrichtung nach Anspruch 1 oder 2, dadurch  g e -
k e n n z e i c h n e t  , daß die Eintauchzeit mit
Hilfe einer Schaltuhr (20) überwachbar ist, welche nach
Ablauf der eingestellten Zeit ein Signal auslöst.

4. Vorrichtung nach einem der Ansprüche 1 bis 3, dadurch
g e k e n n z e i c h n e t  , daß als Schaltuhr ein
von Hand oder motorisch aufziehbarer Federspeicher (20)
verwendet ist.

5. Vorrichtung nach Anspruch 4, dadurch  g e k e n n -
z e i c h n e t  , daß auf der Welle (19) des Federspeichers (20) eine Nockenscheibe (18) angeordnet ist,
die über einen gefederten Stößel (16) ein Rückschlagventil (15) betätigt, welches den über den Flüssigkeitsspiegel der Wanne (4) liegenden Lackbehälter (10)

kurzzeitig belüftet.

6. Vorrichtung nach einem der Ansprüche 1 bis 3, dadurch g e k e n n z e i c h n e t , daß in der Wanne (4) ein vorzugsweise verstellbares Wehr (12) angebracht ist, welches über einen Kanal (13) mit einem Sammelbehälter (11) in Verbindung steht.

0036212

FIG 1

26

27

21

FIG 4

4

12

11

17

25

18

19

24

22    23

FIG 2

FIG 3

Europäisches Patentamt

**EUROPÄISCHER RECHERCHENBERICHT**

**0036212**
Nummer der Anmeldung

EP 81101988.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A,P | <u>DE - B1 - 2 932 724</u> (SIEMENS)<br>+ Gesamt +<br>-- | 1-6 |
| A | <u>US - A - 4 188 841</u> (NAKAMURA)<br>+ Spalte 1, Zeilen 6-53 +<br>-- | 1 |
| A | <u>DE - A - 2 145 664</u> (KABEL)<br>+ Fig.; Seite 3, Absatz 1- Seite 4, Absatz 2 +<br>-- | 1 |
| A | <u>US - A - 1 726 623</u> (HOLLNAGEL)<br>+ Fig.1,2; Seite 1, Zeilen 58 - 102; Seite 2, Zeilen 15 -42+<br>-- | 1 |
| A | <u>US - A - 3 830 677</u> (PAULIN)<br>+ Fig.5; Spalte 2, Zeile 50 - Spalte 3, Zeile 8; Spalte 4, Zeilen45- 64 +<br>-- | 3 |
| A | <u>US - A - 3 507 425</u> (WEBB)<br>+ Fig.2; Spalte 2, Zeilen 5 - 31; Spalte 3, Zeilen 1-51 +<br>-- | 1,3 |
| A | <u>DE - A - 1 952 503</u> (SIEMENS)<br>+ Seite 4, Absatz 4 - Seite 5, Zeile 2; Fig.1 +<br>---- | 3 |

**KLASSIFIKATION DER ANMELDUNG (Int. Cl.¹)**

G 02 B    5/14
C 03 C    25/06

**RECHERCHIERTE SACHGEBIETE (Int. Cl.³)**

G 02 B    5/00
C 03 C    25/00
H 02 G    1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| WIEN | 04-06-1981 | GRONAU |

EPA form 1503.1   06.78